(19) 

Europäisches
Patentamt
European
Patent Office
Office européen
des brevets

(11) **EP 3 907 181 A1**

(12) **EUROPEAN PATENT APPLICATION**
published in accordance with Art. 153(4) EPC

(43) Date of publication:
**10.11.2021 Bulletin 2021/45**

(21) Application number: **19770597.3**

(22) Date of filing: **25.03.2019**

(51) Int Cl.:
**C01B 3/04** *(2006.01)*

(86) International application number:
**PCT/ES2019/070193**

(87) International publication number:
**WO 2019/180297 (26.09.2019 Gazette 2019/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2018 ES 201830287**

(71) Applicants:
• **Hammer & Stone, S.L.**
**28903 Madrid (ES)**

• **Domus Beta, S.L.**
**08017 Barcelona (ES)**

(72) Inventor: **ANTEQUERA RODRÍGUEZ, Nicolás**
**28903 Getafe Madrid (ES)**

(74) Representative: **Padial Martinez, Ana Belen**
**Arochi & Lindner**
**C/ Gurtubay No 6-3o Izquierda**
**28001 Madrid (ES)**

(54) **DEVICE FOR GENERATING HYDROGEN GAS FROM WATER AND HYDROGEN GAS PRODUCTION INSTALLATION AND ELECTRICAL ENERGY GENERATION SYSTEM THAT COMPRISE THE GENERATOR DEVICE**

(57) The invention relates to a device (1) for generating hydrogen from water, with a hydrolysis chamber (2) which is an internal cavity of a hollow recipient (6) with gas outlet holes for evacuating the hydrogen and oxygen generated, and water inlet holes for the passage of water into the hydrolysis chamber (2), the device comprising electrical energy emitters (4) in a wall (3) for emitting electrical signals comprising electromagnetic waves between 3 and 300 MHz into the hydrolysis chamber (2), and an electronic control module (17) for emitting signals that cause the emitters (4) to generate superposed electromagnetic waves which, collectively, have wave frequencies corresponding to a frequency range in which water molecules vibrate to produce vibratory reactions that break bonds between the hydrogen and oxygen of the water molecules to separate water in the hydrolysis chamber (2) into hydrogen and oxygen.

Fig. 5

EP 3 907 181 A1

**Description**

**TECHNICAL FIELD OF THE INVENTION**

The present invention belongs to the technical field of methods and devices for the generation of hydrogen gas from water that are based on the radiation of water with radio frequency signals capable of breaking the water molecule by means of this type of radiation.

**STATE OF THE ART PRIOR TO THE INVENTION**

Hydrogen and energy production are concepts that have been investigated in recent decades.

At present, almost all hydrogen production comes from fossil fuels, a highly polluting process due to the emission of harmful gases and carbon dioxide, the latter element directly related to the greenhouse effect on the planet.

The fact that this process is still being used resides in that methods such as the electrolysis of water cannot be economically applicable since the hydrogen produced by this process involves less energy than that used to obtain it. In the current state of hydrogen generation, different types of systems are known that are fundamentally based on carrying out an efficient electrolysis in economic terms. Thus, electrodes based on alloys are used, generally formed by precious metals or with a high economic cost, so although the electrolysis process can become economically viable, the cost of these alloys makes this type of process unviable. In other cases, electrolysis processes based on inexpensive materials have been carried out, but they present the problem of not offering a great industrial performance.

At a more specific level of the state of the art, alternative technologies are being designed for the generation of hydrogen that try to solve the problem of electrolysis by making it more efficient in economic terms but that finally, at the level of its industrial implementation, do not achieve its objective in a way satisfactory due to the increase in scale and the difficulty of its implementation, either because it contemplates many elements with complicated installations and maintenance, or because it includes high-cost elements as mentioned in the previous paragraphs.

Thus, patent US6534033 describes a hydrogen generation and storage system based on metal hydrides. Elements such as sodium borohydride (NaBH4) are described as preferred over other types of hydrides. A process is described in which borohydride reacts with water producing hydrogen gas (H2) and borate (BO2). However, it is a very slow process that is not feasible on an industrial scale and therefore requires the use of complex catalytic systems that suffer from wear and are high in cost. Furthermore, in any case, the use of these catalytic systems does not optimize the process for industrial use. However, as indicated in patent US6534033, metal hydrides are valid for hydrogen storage.

Patent US7344571 describes a hydrogen generation system where a container is designed that contains what is called hydrogen in solid form through hydrides and that through a process generates hydrogen in gas form. It is a hydrogen storage device capable of releasing previously stored hydrogen in the form of a gas.

Patent US7455829 is also based on the generation of hydrogen through chemical hydrides and where it uses a reaction process between hydride and distilled water vapor. Water vapor is achieved through a chemical mixture that generates water vapor from 0 degrees centigrade. Although the process is original, it is not suitable for industrial productions because it is a complex process that requires more frequent maintenance than other electrolysis processes.

A hydrogen generator that improves electrolysis in certain aspects is the one mentioned in patent US7513978. In said document, a conventional electrolysis-based generator is described that has an optimized cathode and anode structure but makes use of additives such as electrolytes and other chemical elements. It is precisely these additives that actually carry out electrolysis in the most optimized way, but their presence also implies the consequent economic addition of said additives and the wear of the cathodes and anodes due to the chemical reactions of the conventional electrolysis process. Furthermore, the difference in energy costs between conventional electrolysis and these types of methods is small.

In the same way as in the previous case, patent US7803349 describes a hydrogen generator based on electrodes basically formed by aluminum and where it is ensured that the purity of the hydrogen is 99.99% or higher. Actually, the electrolysis process, in any of its versions, produces hydrogen of that purity, this being the best characteristic of the electrolysis process. Now, the electrodes always suffer wear and tear and finally have to be replaced by new ones, the case of aluminum electrodes being the case most sensitive to corrosion and therefore having a shorter duration. In any case, it is a conventional electrolysis process with additives in the form of electrolyte.

For its part, patent US7833473 basically presents a product for the storage of hydrogen based on alloys of materials, ceramic elements and where gallium is an element present. Therefore, it does not contemplate the production of hydrogen but rather focuses on the recovery of the hydrogen stored in the device.

Similar to the process described in the aforementioned US7455829 patent, US7951349 patent describes a process for storing and generating hydrogen through water vapor. Hydrogen is generated in the form of gas for use in combustion vehicles. In the same way as the previous patent, it is based on an electrolysis process with certain improvements but that does not solve the problem of generating hydrogen on demand at a minimum cost.

Another hydrogen generator based on catalysts is the one presented in patent application US20060185242. It uses 20% sodium borohydride, 8% potassium hydroxide and 72% water and a specifically designed catalyst that interacts with the above mixture to produce hydrogen more efficiently. The efficiency of the process must be low due to the mixture used as well as the cost of the catalyst must be high for the generation of hydrogen and the useful life of the same, which will require its replacement and whose process is usually expensive.

On the other hand, and already in the field of hydrogen generation based on water cd radiation with radio frequency signals, there are some references that show the breakdown of the water molecule by this type of radiation.

Thus, patent application US20090294300 describes a system, which is based on the combustion that occurs in salty water due to the use of a certain radio frequency signal in a certain device. As is known, water is impossible to burn but scientifically speaking, the generation of a flame and, therefore, the generation of a "fuel" is feasible in scientific terms. It really is not a mystery what happens in the process exposed in the analyzed patent. Hydrogen cannot burn if it is bound to oxygen (as in water). But, if you mix water with sodium chloride, the bonds between hydrogen and oxygen in the water molecule are weakened. So if an interaction process is carried out with a very strong radio wave, the hydrogen and oxygen can separate. If heat is also added, then the hydrogen will produce a flame, and this is what actually burns. The process has separated the oxygen and hydrogen and is burning the hydrogen, not the water.

However, the process generates a flame but does not collect hydrogen or oxygen and works exclusively with salt water due to what has been explained above. Therefore, the process can be understood as a heat generator or combustion process due to hydrogen.

Finally, patent EP2911976A4 refers to a hydrogen generator based on radio waves that act on water droplets and whose main disadvantage resides in the slowness of the process and the use of electrolytes.

The current state of the art and the various methods contemplated for the production of hydrogen do not satisfactorily solve the problem of hydrogen generation on demand in such a way that the process is commercially viable in terms of economics and performance on an industrial scale.

DESCRIPTION OF THE INVENTION

The present invention aims to solve the drawbacks inherent in the state of the art by means of a technology based on electromagnetic waves and the principle of superposition of the same so that a vibratory chain reaction is carried out that is capable of breaking the covalent bonds. between hydrogen and oxygen with efficient performance using a specially designed hydrolysis chamber structure.

Thus, the present invention relates to a hydrogen gas generating device from water, a hydrogen gas production facility comprising the generating device, and to an electrical energy generation system comprising the hydrogen gas production facility.

According to the invention, the generating device comprises a hydrolysis chamber surrounded by a wall and communicated with the water chamber to dissociate water molecules present in the hydrolysis chamber into hydrogen and oxygen gases, the hydrolysis chamber comprising at least a water inlet to receive water to be dissociated and at least one gas outlet to evacuate hydrogen and oxygen gases generated in the dissociation of water in the hydrolysis chamber, a plurality of electric energy emitters connected to the hydrolysis chamber to dissociate water contained in the hydrolysis chamber in hydrogen gas and oxygen gas, and to an electronic control module connected to the electric power emitters and designed to control the electric power supplied to the electric power emitters, a gas separator system to separate hydrogen gas of the gases generated in the hydrolysis chamber, and at least one hydrogen outlet to evacuate hydrogen gas separated by gas separator system. In this generating device,

   the hydrolysis chamber is an internal cavity of a hollow container;
   the water inlet and the gas outlet comprise through holes in the wall of the hollow container;
   the wall of the hollow container comprises at least one gas outlet orifice to evacuate the hydrogen and oxygen gases generated from the hydrolysis chamber, as well as at least one water inlet orifice for the passage of water to the hydrolysis chamber;
   the electrical energy emitters are arranged on the wall of the hollow container, to emit respective electrical signals that comprise electromagnetic waves of between 3 MHz and 300 MHz into the hydrolysis chamber, the electronic control module is designed to emit signals that make that emitters of electrical energy generate superimposed electromagnetic waves that together present wave frequencies corresponding to a range of frequencies in which water molecules vibrate to produce vibratory reactions in water molecules that break bonds between hydrogen and oxygen in the molecules of water to dissociate water contained in the hydrolysis chamber into hydrogen gas and oxygen gas.

The present invention is based on the known fact that molecules vibrate and that such vibration affects their bonds, taking into account the previous theory, it is a device that comprises a structure specially designed to facilitate the dissociation of water molecules. , and an electronic device, connected to the previous structure and that generates signals that make it possible to vibrate the elements arranged for it in the mentioned structure.

Thus, it is known that harmonic oscillations occur when a system contains a part that experiences a restoring force proportional to the displacement of the equilibrium position.

In quantum mechanics, the potential energy of a diatomic molecule increases if the nuclei are displaced from their equilibrium positions. When this displacement is small, the potential energy can be expressed as the first terms of a Taylor series:

$$V(x) = V(0) + \left(\frac{dV}{dx}\right)_0 x + \left(\frac{d^2V}{dx^2}\right)_0 x^2 + \dots$$

where

V(x) is the potential energy at point x
V(0) is the potential energy at point 0
dV is the change in potential energy
dx is the variation of the displacement (distance)
$d^2V$ is the second variation of the potential
$dx^2$ is the second variation of the displacement so that the quotient dV/dx is the first derivative of the potential at point 0, and the quotient $d^2V / dx^2$ is the second derivative of the potential at the point 0.

In this way, it can be deduced if one is at a minimum or a maximum of the function that represents the energy curve.

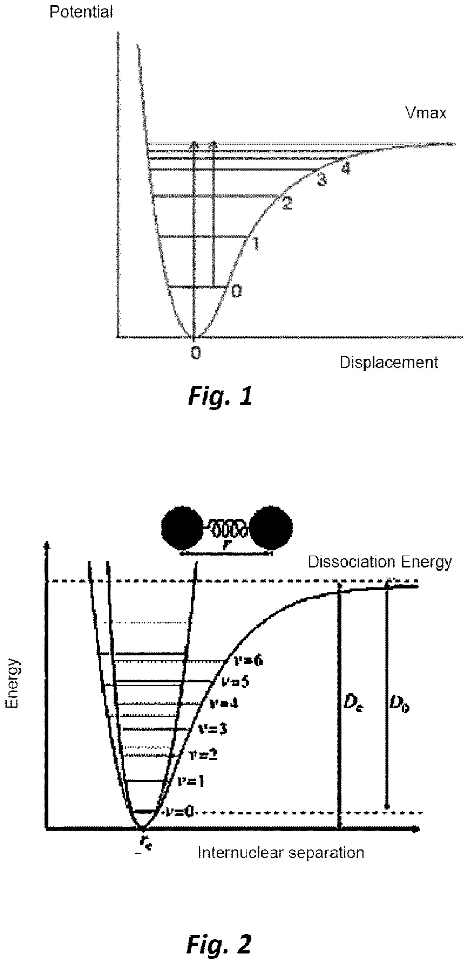

Therefore, when the equilibrium bond length x = 0 and V(0) = 0, the potential energy curve has a minimum, as can be seen in figure 1.

For small displacements of the bonds of the atoms that make up a molecule, caused by vibrations, such as those that underlie the present invention, terms greater than the second order can be omitted, so we are left with the following reduction that corresponds to the potential energy of the bonds in the molecule:

$$V(x) = \frac{1}{2}kx^2 \qquad k = \left(\frac{d^2V}{dx^2}\right)_0$$

where V(x), $x^2$ $d^2V$ and $dx^2$ have the meanings indicated above and k is the coupling constant and represents the potential energy of the bonds at point 0.

Furthermore, the potential energy near the equilibrium distance is parabolic (that is, proportional to $x^2$ Thus, the Hamiltonian operator for two atoms of masses m1 & m2 is,

$$H = -\frac{\hbar}{2m_1}\frac{d^2}{dx^2} - \frac{\hbar}{2m_2}\frac{d^2}{dx^2} + \frac{1}{2}kx^2$$

where k and $dx^2$ have the previously indicated meanings and
H is the Hamiltonian operator
$m_1$ is the mass of the first atom
$m_2$ is the mass of the second atom
h is the kinetic energy
$d^2$ is the second derivative of the energy with respect to the distance
$kx^2$ is the potential energy. The Hamiltonian H has two distinct but related meanings. In classical mechanics, it is a function that describes the state of a mechanical system in terms of position and moment variables and is the basis for the reformulation of classical mechanics known as Hamiltonian mechanics.

Now, when the potential energy depends only on the separation between the particles of the system, it remains that,

$$H = -\frac{\hbar}{2m}\frac{d^2}{dx^2} + \frac{1}{2}kx^2$$

$$\frac{1}{m} = \frac{1}{m_1} + \frac{1}{m_2}$$

where m is the reduced mass, such that $\frac{1}{m} = \frac{1}{m_1} + \frac{1}{m_2}$ and where H, h, $d^2$, $kx^2$ and $dx^2$, $m_1$ and $m_2$ have the previously indicated meanings.

The appearance of the reduced mass m in the Hamiltonian is physically plausible, because the motion is dominated by the lighter atom (compared to the other atom). When m1 >> m2 it can be assumed that m ≈ m2 that is, that is, m is approximately the mass of the lightest particle. A Hamiltonian with a parabolic potential energy is characteristic of a harmonic oscillator, so the commented solutions can be adopted, such that,

$$E_v = \left(v + \frac{1}{2}\right)\hbar\omega \; ; \quad \omega = \left(\frac{k}{m}\right)^{1/2}$$

where

E$_v$ is the value of the Hamiltonian operator with parabolic potential energy
v and k have the previously mentioned meanings and having v a value of 1, 2, 3, ... n
m is the atomic mass of the lightest atom of the atoms that make up the molecule
hω is the separation between the different levels of vibrational energies
ω is the equilibrium vibrational frequency, that is, the harmonic frequency

The internal motion of a diatomic molecule is made up of the vibrational motion, namely the change in the distance r between the nuclei of the atoms, and the rotational movement, namely the change in the spatial orientation of the line that joins the nuclei (see figure 2), interesting in the case of the present invention the vibration movement and its associated energy levels.

Thus, in terms of approximation to the model, the vibrational energy levels of a diatomic molecule, such as water, can be reasonably well approximated by the vibrational energy levels of the harmonic oscillator, so we have to apply the following calculation:

$$E_{vib} \approx \left(v + \frac{1}{2}\right)h\omega$$

where hω and v havethe previously indicated meanings

E$_{vib}$ is the vibrational energy of the diatomic molecule, and
v is a vibrational quantum number selected from 1, 2, 3 ... m
ω is the vibrational or harmonic frequency expressed according to the formula

$$\omega = \frac{1}{2\pi}\left(\frac{k}{\mu}\right)^{1/2}$$

in which

2π is the constant Tau used in circular or vibratory movements, whose value is twice the value of π
k is the bond constant, that is, the coupling constant that represents the potential energy of the bonds
μ is the reduced mass of the system, that is, of the molecule

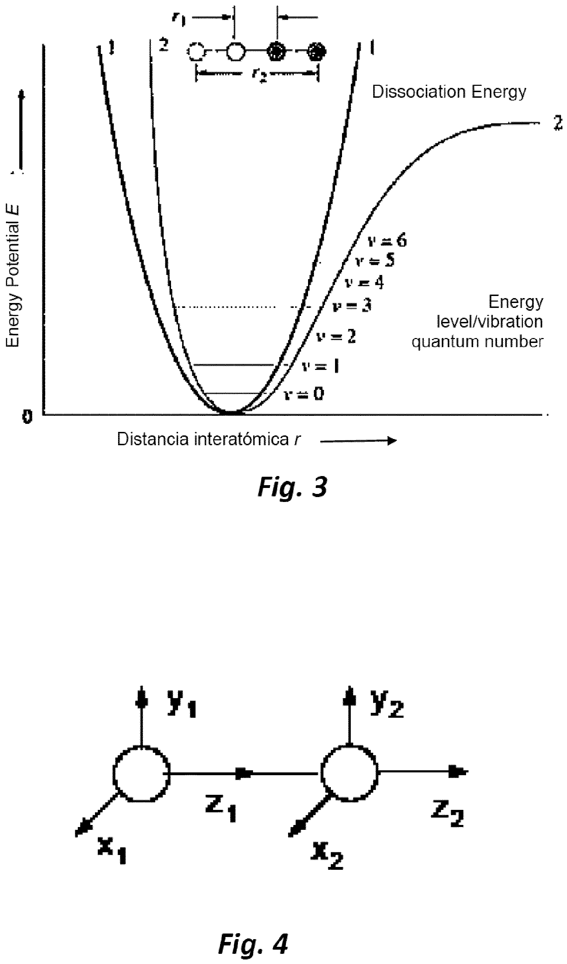

However, it must be taken into account that, unlike the harmonic oscillator, a diatomic molecule has a finite number of binding vibrational levels (see figure 3). A more precise expression for molecular vibrational energy is expressed as,

$$E_v = \left(v + \frac{1}{2}\right)\hbar\omega - \left(v + \frac{1}{2}\right)^2 \hbar\omega x_e$$

where v has the previously indicated meaning

Ev is the vibrational energy

$\hbar\omega x_e$ is the equilibrium distance between the atoms of the molecule, that is, the distance between atoms of the molecule without external energy input

On the basis of the above, it can be concluded that instead of being equally spaced, the vibrational levels of the molecule get closer and closer as u increases and finally the vibrational energy becomes large enough to cause the dissociation of the molecule into its atoms.

In the case of triatomic molecules, as in the case of the water molecule, the previous theory serves as a precedent to this case but taking into account the new polyatomic structure, thus, for a polyatomic molecule with N atoms, the potential energy hypersurface is a function of 3N - 6 variables. This is so because the degrees of freedom (translation, rotation and vibration) of N atoms are 3N. A function of three variables cannot be represented graphically and in general, U (R) is represented in the z coordinate against two other x, y coordinates, while keeping the rest of the variables fixed (figure 4).

In a diatomic molecule there is only one way to vibrate, stretching or shortening the bond; On the other hand, in a polyatomic molecule, there are different ways of vibrating, depending on how the bonds are stressed, the angles are flexed, etc. The resulting IR spectrum must necessarily be much more complex. Therefore, the most appropriate way to express these modes of vibration would be through particular coordinates (normal vibration coordinates, Q,) that allow expressing the molecular potential as a sum of harmonic potentials, such that

$$V = \frac{1}{2} \sum_{i}^{3N} k_i Q_i^2$$

being the precedent of the previous formula, the case seen in the diatomic model, and where

V is the potential energy of the bonds of the molecule

N is the number of atoms in the molecule

$k_i$ is the atomic bond force constant

$Q_i^2$ are the normal coordinates of vibration

In one embodiment of the invention, the wave frequencies of the superimposed electromagnetic waves generated by the electric power emitters are between 5 MHz and 50 MHz, such as between 20 MHz and 30 MHz.

In turn, the electrical energy emitted by the electrical energy emitters can have a power of 600 W to 1.5 KW, particularly 700 W to 1.2 KW.

All or at least a part of the electric energy emitters can comprise metallic rod electrodes (pins) with free ends that emerge into the hydrolysis chamber. Alternatively, all or at least a part of the electrical energy emitters can be piezoelectric elements arranged in the wall of the hollow container, or conventional carbon dipoles themselves. Also alternatively, all or at least a part of the electric energy emitters comprise metal electrodes with free ends capped in plates arranged inside the hydrolysis chamber. Although preferably all the electric energy emitters are the same type described above, two or more of these types of emitters can also be combined. The metallic electrodes preferably function as radio frequency wave emitting antennas or dipoles.

Preferably, the electric energy emitters are arranged in non-opposite positions of opposite parts of the wall of the container, which contributes to the fact that the electromagnetic waves they generate do not cancel each other out.

Preferably, the generating device comprises at least one water reservoir to contain water to be dissociated, and the hollow container is immobilized in the water reservoir, so that, during dissociation of the water, it remains at least partially submerged in the water contained in the water tank, and each water inlet and each gas outlet passes through the wall of the container. The water tank may comprise at least one water supply inlet for receiving water and at least one gas evacuation outlet exiting the hollow container. Preferably, the hollow container is immobilized in the water tank, so that, at least during the dissociation of the water, it is completely submerged in the water contained in the water tank.

In one embodiment of the generator device, the gas separator system is arranged in an upper space of the water tank; and comprises a first evacuation outlet for evacuating hydrogen gas exiting the gas separator system, and a second evacuation outlet for evacuating oxygen gas exiting the gas separator system.

The water tank may comprise a lower damping chamber to prevent the water entering the tank from causing turbulence in the body of water entering the water tank in which the hollow container is at least partially submerged and which could hinder the ingress of water into the hydrolysis chamber. This buffer chamber is located in a lower part of the water tank below the hollow container, and an upper chamber in which the hollow container is arranged. Between the lower damping chamber and the upper chamber is arranged a damping plate, such as a perforated plate, which allows the flow of water from the lower chamber into the upper chamber, and each water supply inlet empties into the damping chamber.

According to a preferred embodiment of the hollow container, the internal cavity of the hollow container is in the shape of a convex polyhedron, preferably a geodesic dome, the faces of which are defined on internal polygonal surfaces of the wall of the hollow container, more preferably an irregular polyhedron shape, such as for example of a truncated icosahedron or geodesic dome, which is composed of 12 pentagons and 20 hexagons and whose faces are defined by internal polygonal surfaces in the wall of the hollow container.

In this preferred embodiment of the hollow container, the electrical energy emitters may be arranged in correspondence with respective centers of the internal polygonal surfaces of the wall of the hollow container. In turn, the hollow container may comprise a plurality of first through holes that pierce the wall of the container in the upper half of the container and a plurality of second through holes that pierce the wall of the container in the upper half of the container. Preferably, these through holes are present in correspondence with the vertices of the internal polygonal surfaces of the wall of the hollow container. The through holes that penetrate the wall of the hollow container can have an average diameter of 2 to 5 mm, particularly 2.5 to 3 mm,

In other embodiments of the hollow container, the internal cavity of the container is in the shape of a sphere or spheroid (such as ovular), delimited by the wall of the hollow container. Also in these embodiments, the hollow container may comprise a plurality of first through holes that pierce the wall of the hollow container in the upper half of the container and a plurality of second through holes that pierce the wall of the hollow container in the upper half of the container. Also in this case, the through holes that penetrate the wall of the hollow container can have an average diameter of 2 to 5 mm, particularly of 2.5 to 3 mm,

The hollow container may have an outer shape of a sphere or a spheroid, and be made of a material selected from heat-resistant plastic materials and ceramic materials.

The hydrogen gas production installation according to the invention comprises an electrical power supply, a hydrogen gas generating device, a water supply system that supplies water to the generating device, a collecting system for the hydrogen gas generated by the generating device, a storage system for the hydrogen gas collected by the collecting system, in which the generating device is the generating device with the main characteristics and, where appropriate, one or more of the optional or preferred characteristics, previously described, and in which the power supply is connected to the electric power emitters through the electronic control module.

The power source of the installation can comprise a battery that supplies electrical energy to the electronic control module and a photovoltaic installation that supplies electrical energy to the battery and, furthermore, a system for collecting the oxygen gas generated by the generating device, and a system storage of oxygen gas collected by the collection system.

In turn, the electrical energy generation system comprising at least one fuel cell that generates energy from a reaction of hydrogen and oxygen, a hydrogen and oxygen supply system connected to the fuel cell, and an installation of hydrogen gas production with the main characteristics and, where appropriate, one or more of the optional or preferred characteristics, previously described, and in which the hydrogen supplied to the fuel cell comes from the hydrogen gas separated by the gas device of the generating device included in the installation. In this system, the oxygen supplied to the fuel cell can come from the oxygen gas separated by the gas separator device from the generator device.

The hydrogen gas production facility can be integrated into an electrical power generation system comprising a fuel cell. The hydrogen tank and the oxygen supply coming from the ambient air or, where appropriate, from the oxygen tank, are connected to the fuel cell in a conventional manner respectively via a hydrogen line and an oxygen line for feed hydrogen gas and oxygen gas to the fuel cell which generates electrical energy from a reaction of hydrogen gas and oxygen gas that results in the formation of water that must be evacuated from the fuel cell, for which it can be connected by means of a water conduit to the water supply tank from which the water that can be circulated through the water conduit to the water supply inlet of the generating device or, where appropriate, disposed of outside the installation. In the event that the installation does not include collecting the oxygen gas generated in the generator device and storing it in an oxygen tank, the oxygen gas necessary for the reaction in the fuel cell can be collected from the ambient air.

The electricity output of the fuel cell, that is to say its anode and its cathode, can be connected to an electrical control module that can comprise, depending on the intended applications, a transformer, a current inverter, etc., which in turn Once it can be connected, through a first electric line, to an electrical device, such as, for example, an electric accumulator, an electricity transmission line, an electric motor, etc. The electrical control module may in turn be connected, through a second electrical line, to the electrical power supply module, which will be able to use the electrical energy received from the electrical control module to charge the backup battery and / or for the power supply to the electronic control module that generates the electromagnetic waves for the dissociation of the water found in the hydrolysis chamber of the generating device.

The hydrogen gas production installation and the electricity generation system can further comprise additional elements that are conventional per se, such as, for example, gas and water pressure sensors, electrical sensors, an electrical protection system against overloads, shut-off valves. and safety, pumps that pump hydrogen gas and hydrogen gas to their respective tanks, a water pump to pump water from the water supply tank to the generating device.

In an embodiment of the electrical generation system, the electrical power supply is a photovoltaic device whose photovoltaic elements can be photovoltaic cells arranged in rigid panels arranged on external parts of the car body, or layers of photovoltaic paint applied to parts external to the bodywork. Those parts of the body can preferably be those parts of the car body exposed to a maximum of solar radiation such as the roof, the hood and / or the trunk lid.

The electrical power supply provides electrical energy to an electrical supply module connected in turn to the electronic control module that generates and transmits to the energy emitters the electromagnetic waves that are used in the generating device to dissociate the water present in the chamber hydrolysis in hydrogen gas and oxygen gas.

The hydrogen gas produced in the generator device can be brought into and accumulated in the hydrogen reservoir through the first gas conduit while the generated oxygen exits the generator device through the second gas conduit.

The fuel cell receives hydrogen gas from the hydrogen reservoir through the hydrogen conduit, and oxygen gas contained in the ambient air through the air intake conduit that leads to an air intake of the vehicle. The water generated in the fuel cell is evacuated through the water conduit. The water conduit and the oxygen conduit are connected in an exhaust pipe whereby the oxygen gas generated in the generator device and water generated in the fuel cell are evacuated to the outside of the vehicle.

Through its electrical energy output and the electrical control module, the fuel cell supplies electrical energy to the electrical device, which in this case can be a conventional electrical accumulator itself, depending on the performance designed with respect to hydrogen production. by the generating device, such as the electric accumulators currently used in hybrid cars, or the car batteries used in cars with an internal combustion engine.

The electrical device, that is to say the electrical accumulator in the case of this embodiment, supplies electrical energy, in a manner known per se, to the electricity consuming systems of the automobile that comprise the movement generator system that comprises the electric propulsion motors, and electrical systems such as exterior and interior lighting, air conditioning, fans, comfort and safety elements, hydraulic pumps for power steering and power-assisted brake, etc.

The generating device, the power supply, the backup battery, the hydrogen tank, the fuel cell, the electrical power outlet, the electrical device, the electrical systems and the motion generating systems of the vehicle are connected to one system of sensors that allow to detect / monitor the state of the aforementioned elements. These sensors are connected to the power supply module that is programmed to record and evaluate the measurements detected by the sensor system and to govern and distribute energy based on these measurements and the energy demand of the vehicle at all times as well as the status of the electric battery, the hydrogen tank and, in general, the state indicated by the respective electrical demand sensors.

**BRIEF DESCRIPTION OF THE FIGURES**

Embodiments of the invention will now be described on the basis of schematic drawings, in which

Fig. 1 is a graph showing the potential energy curve of a diatomic molecule;

Figure 2 is a graph showing the effects of internal motion on the potential energy of a diatomic molecule and its associated energy levels;

Figure 3 is a graph showing the effects of a finite number of binding vibrational levels in a diatomic molecule

Figure 4 is a graph showing the representative coordinates in which translational, rotational and vibrational movements occur in a polyatomic molecule .

Figure 5 is a sectional elevation view of an embodiment of the hydrogen gas generating device according to the invention;

Figure 6 is a sectional view on the line A-A of the generating device illustrated in Figure 5;

Figure 7 is a sectional view along the line B-B that appears in Figure 6, of the interior of a first embodiment of the hollow container integrated in the generating device that is illustrated in Figures 5 and 6;

Figure 8 a view of detail I indicated in figure 7;

Figure 9 is a sectional view on line D-D appearing in Figure 8;

Figure 10 is a sectional view along the line B-B appearing in Figure 2 of the interior of a second embodiment of the hollow container integrated in the generating device that is illustrated in Figures 5 and 6;

Figure 11 is a view of detail I indicated in figure 10;

Figure 12 is a sectional view on the line E-E that appears in Figure 11;

Figure 13 is a sectional view along the line B-B appearing in Figure 6 of the interior of a third embodiment of the hollow container integrated in the generating device that is illustrated in Figures 5 and 6;

Figure 14 is a view of detail I indicated in figure 13;

Figure 15 is a sectional view on the line F-F that appears in Figure 14;

Figure 16 is a sectional view on line C-C of the generating device illustrated in Figure 5; wherein in addition the wall of the hollow container is shown transparent so that the configuration of the internal surface of the wall can be appreciated;

Figures 17A, 17B, 17C, 17D and 17E are simplified cross-sectional views of the hollow container of Figure 6, in which the behavior of the electromagnetic waves emitted by the electric energy emitters is schematically shown;

Figure 18 is a block diagram of an embodiment of a hydrogen gas production installation according to the invention, applied to an electric power generation system and incorporating a generating device according to the invention, connected to a fuel cell ;

Figure 19 is a block diagram of an embodiment of the electrical power generation system incorporating the hydrogen gas production facility according to the invention, applied to a vehicle.

Reference signs appear in these figures that identify the following:

1        generator device
2        hydrolysis chamber 3 wall
3a       internal polygonal surfaces
4        electric power emitter
4        to free end
4b       piezoelectric element
4c       plate
4d       connecting part
5        gas separator system
6        hollow container
7        through holes
8        water tank
9        water supply inlet
9a       water conduction
10       first evacuation outlet for evacuating hydrogen gas 10a first gas conduit
11       second evacuation outlet to evacuate oxygen gas
11a      Second gas pipe

| 12 | lower damping chamber |
|---|---|
| 13 | upper chamber |
| 14 | damping plate |
| 15 | support |
| 16 | signal transmitter cable |
| 17 | electronic control module |
| 18 | power supply module |
| 19 | power supply |
| 20 | battery |
| 21 | water supply tank |
| 22 | hydrogen tank |
| 22a | hydrogen line |
| 23 | oxygen reservoir |
| 23a | oxygen line |
| 23b | intake duct |
| 24 | fuel cell |
| 24a | water pipe |
| 25 | electrical power output |
| 26 | electrical control module |
| 26a | first power line |
| 26b | second power line |
| 27 | electrical device |
| 28 | electrical energy consuming systems |
| 28a | motion generator systems |
| 28b | electrical systems |
| 29 | sensor system |
| 30 | exhaust pipe |

| W | emitted electromagnetic waves |
|---|---|
| W' | reflected electromagnetic waves |
| P. P' | interference point |
| Z | interference zone |

**EMBODIMENTS OF THE INVENTION**

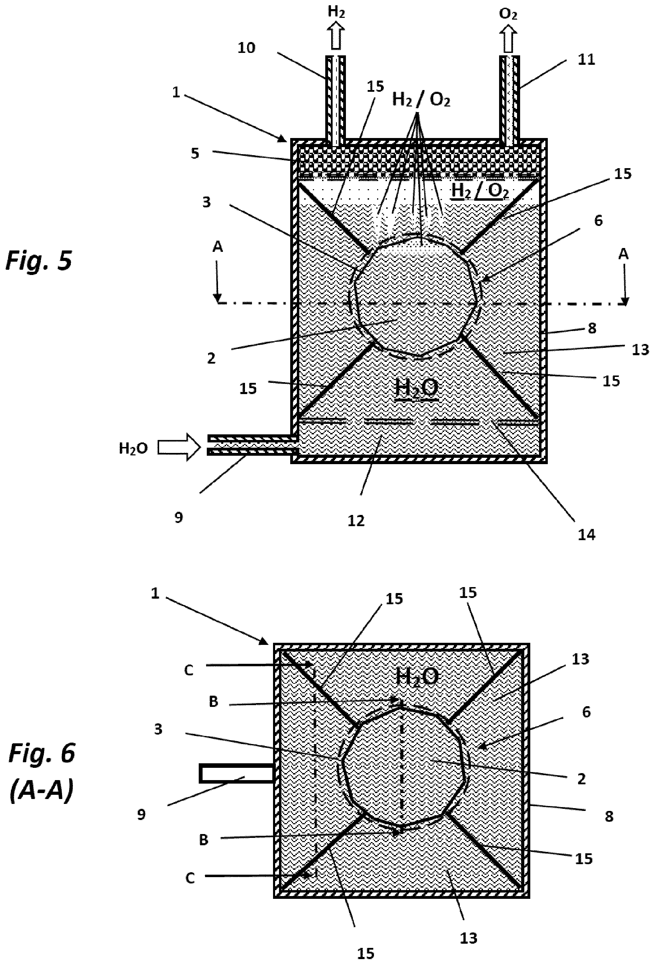

In the embodiment illustrated in Figures 5-17, the hydrogen gas generating device (1) from water comprises a hydrolysis chamber (2) surrounded by a wall (3) to dissociate water molecules present in the chamber. hydrolysis (2) in hydrogen and oxygen gases. The hydrolysis chamber (2) is an internal cavity of a hollow container (6) that comprises the wall (3) that surrounds the hydrolysis chamber (2). The internal cavity of the hollow container (6) has the shape of a geodesic dome, composed of 12 pentagons and 20 hexagons, whose faces are defined by internal polygonal surfaces (3a) on the wall (3) of the hollow container (6). The hollow container (6) is shaped like a sphere and is made of a heat resistant plastic material.

The wall (3) of the hollow container (6) is provided with through holes (7) that comprise inlet holes for the passage of water to be dissociated into the internal cavity that forms the hydrolysis chamber (2), and for the outlet of hydrogen and oxygen gases generated in the dissociation of water in the hydrolysis chamber (2). As can be seen, first through holes (7) are provided that penetrate the wall (3) of the hollow container (6) in the upper half of the hollow container (6) and second through holes (7) that penetrate the wall (3) of the hollow container (6) in the upper half of the hollow container (6). The through holes (7) are located in correspondence with the vertices of the internal polygonal surfaces (3a) of the wall (3) of the hollow container (6). The through holes (7) can have an average diameter of 2 to 5 mm, such as 2.5 to 3 mm.

The generating device (1) comprises a water tank (8) to contain water to be dissociated, and in which the hollow container (6) is immobilized by eight supports (15) so that, during the dissociation of the water it is submerged in the water contained in the water tank (8). The water tank (8) further comprises a water supply inlet (9) to receive water to be separated. Each support extends diagonally between an inner vertex between two adjoining walls of the water tank (8) and the hollow container (6).

The water tank (8) comprises a lower damping chamber (12) located in a lower part of the water tank (8) below the hollow container (6), and an upper chamber (13) in which it is arranged of the hollow container (6). Between the lower damping chamber (12) and the upper chamber (13) a perforated plate is arranged which has the function of a damping plate (14) that prevents the water that has entered through the supply inlet (9) from flowing from the lower chamber (12) towards the upper chamber (13) and enter the upper chamber (13) evenly and without turbulence.

In an upper space of the water tank (8) there is a gas separator system (5) that comprises a first evacuation outlet (10) to evacuate hydrogen gas leaving the gas separator system (5), and a second outlet for evacuation (11) to evacuate oxygen gas leaving the gas separator system (5).

To dissociate water contained in the hydrolysis chamber (2) into hydrogen gas and oxygen gas, the generating device (1) is provided with a plurality of emitters (4) of electrical energy in the form of electromagnetic wave signals, connected to the chamber hydrolysis (2). In particular, the electric energy emitters (4) are arranged on the wall (3) of the hollow container (6), to emit respective electrical signals comprising electromagnetic waves into the hydrolysis chamber (2).

The emitters (4) arranged in correspondence with respective centers of the internal polygonal surfaces (3a) of the wall (3) of the hollow container (6), so that they are in non-opposite positions of opposite parts of the wall (3) of the hollow container (6), so that basically it is avoided that the magnetic waves emitted by the different emitters (4) cancel each other out, and it is achieved that they overlap each other. In the embodiments illustrated in the figures, there are 32 emitters (4), one on each internal polygonal surface (3a) that forms a respective face of the geodesic dome composed of 12 pentagons and 20 hexagons. According to this embodiment, each support (15) guides four lead wires (16).

It has been found that a hollow container (6) whose configured hydrolysis chamber has the shape of a geodesic dome of 10-15 cm in diameter, provided with 32 emitters (4) of electrical energy in the form of pins, to which a Electric current of certain frequencies between 5 and 25 MHz and with a power of 800W, it is capable of generating about 100 liters of hydrogen gas per hour from the water contained in the hydrolysis chamber.

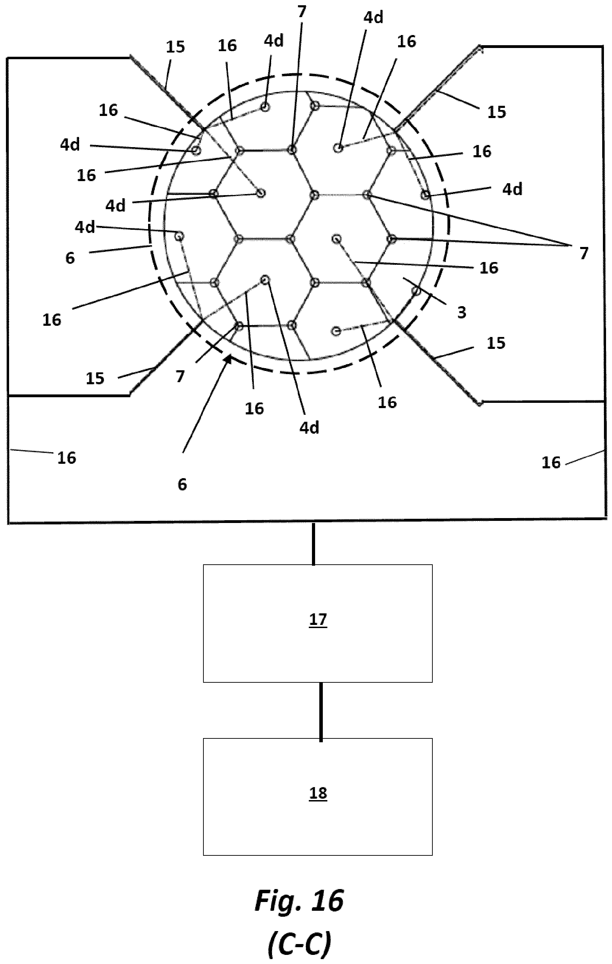

The emitters receive signals from an electronic control module (17) (figure 16) that is designed to emit signals that cause the emitters (4) of electrical energy to generate superimposed electromagnetic waves that together have wave frequencies corresponding to a range of frequencies in which water molecules vibrate to produce vibratory reactions in the water molecules that break bonds between hydrogen and oxygen of the water molecules to dissociate water contained in the hydrolysis chamber (2) into hydrogen gas and oxygen gas. The wave frequencies of the superimposed electromagnetic waves can be between 5 MHz and 50 MHz, and the electric energy emitted by the electric power emitters (4) can have a power of 600 W to 1.5 KW.

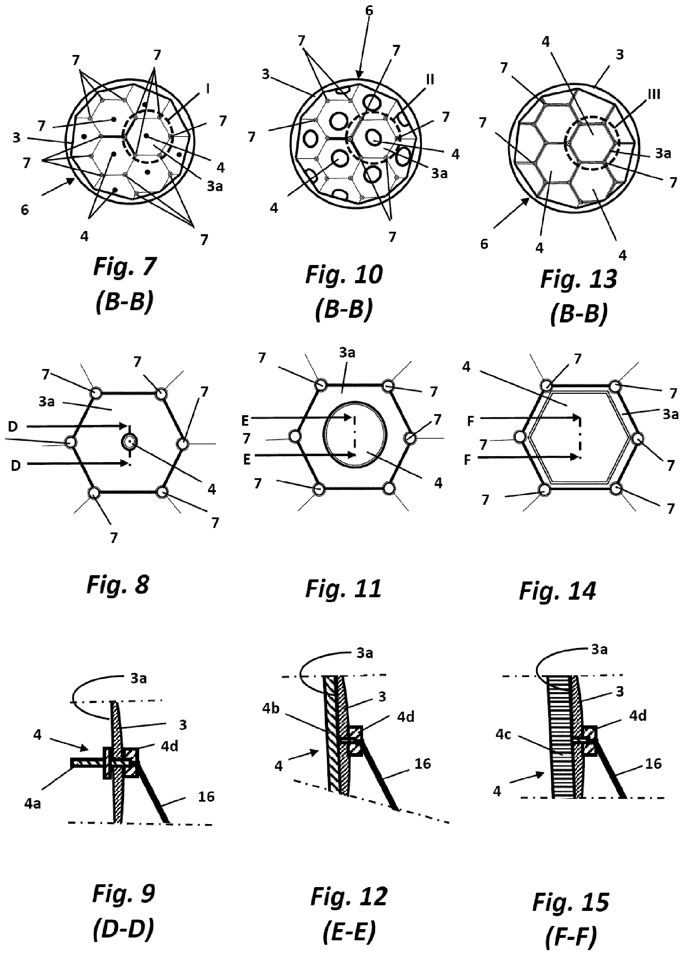

Figures 7-9 illustrate a first embodiment of the energy emitters (4), according to which each energy emitter (4) comprises a metal rod (pin) electrode with a free end (4a) emerging from a from the internal polygonal surfaces (3a) of the wall (3) of the hollow container (6) into the hydrolysis chamber (2).

Figures 10-12 illustrate a second embodiment of the energy emitters (4), according to which each energy emitter (4) comprises a piezoelectric element (4b) arranged on one of the internal polygonal surfaces (3a) of the wall (3) of the hollow container (6) into the hydrolysis chamber (2).

Figures 13-15 illustrate a third embodiment of the energy emitters (4), according to which each energy emitter (4) comprises a metal electrode with a free end finished off in a plate (4c) arranged in one of the internal polygonal surfaces (3a) of the wall (3) of the hydrolysis chamber (2).

In any of these three embodiments, each energy emitter (4) is, as shown in Figure 16, connected to a signal conductor cable (16) via a connector part (4d). As can be seen in figure 16, several of the conductive cables (16) extend from the connector part (4b) towards the support (15) that is closest to them and enter inside the corresponding support (15) (which it can be, for example, a tubular support). Inside the support (15) the conductive cables (16) are guided towards the electronic control module (17) which in turn receives electrical energy from the electrical power supply module (18).

To generate hydrogen, the water tank (8) is filled with water through the water supply inlet (9). The water present in the water tank (8) penetrates through the through holes (7) in the wall (3) of the hollow container (6) into the hydrolysis chamber (2). The water tank (8) is filled until the hollow container (6) is completely submerged.

When the energy emitters (4) are activated, the water present in the hydrolysis chamber (2) is hydrolyzed into oxygen and hydrogen that bubble up to the top of the hydrolysis chamber (2) and leave it through the holes (7) towards the upper part of the water tank (8), from where they enter the gas separator system (5) in itself conventional in which they separate into hydrogen that comes out of the first evacuation outlet (10) and oxygen that exits through the second evacuation exit (11). As hydrogen and oxygen leave the water tank (8), water is supplied through the water supply inlet (9) so that the necessary volume of water to be dissociated is maintained in the hollow container (6).

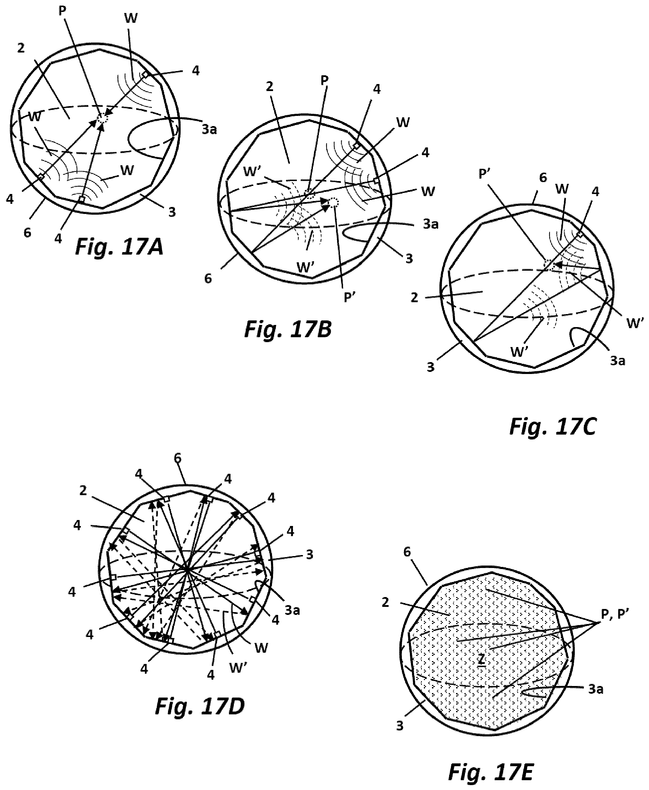

The electric energy emitters (4) emit electromagnetic waves into the hydrolysis chamber (2) so that the water present in the hydrolysis chamber (2) is dissociated into hydrogen gas and oxygen gas. Figures 17A-17E show by way of example some of the electromagnetic waves (W) that are emitted into the hydrolysis chamber (2). Thus, in Figures 17A, 17B, 17C, 17D and 17E the behavior of electromagnetic waves (W) emitted by some of the electric energy emitters (4) inside the hydrolysis chamber is shown schematically by way of simplified examples. (2) of the hollow container (6) filled with water (not shown in Figures 17A-17E) to be dissociated.

The hollow container (6) to which these figures refer, is the one shown in figure 6, that is, its internal cavity that forms the hydrolysis chamber has the shape of a geodesic dome, composed of 12 pentagons and 20 hexagons, so that it comprises 32 electric energy emitters (4), one in the center of each internal polygonal surface (3a) that forms a respective face of the geodesic dome. In this way, the energy emitters (4) are in non-opposite positions of opposite parts of the wall (3) of the hollow container (6), so that basically it is avoided that the magnetic waves emitted by the different emitters (4 ) cancel each other out, and it is achieved that they overlap each other

In figure 17A, three electromagnetic waves (W) emitted by respective emitters (4) of electrical energy can be seen from non-confronting places. These electromagnetic waves (W) advance through the water inside the hydrolysis chamber (2) in the direction of the arrows towards the opposite inner polygonal surface (3a) of the hollow container (6), and cross each other at a point interference (P) in which the superposition of said waves (W) begins.

In figure 17B, there can seen electromagnetic waves (W) emitted by two emitters (4) of electrical energy that also advance through the water inside the hydrolysis chamber (2) in the direction of the arrows towards the internal polygonal surface. (3a) opposite the hollow container (6) and they cross each other at an interference point (P) where the superposition of said waves (W) begins. The superimposed electromagnetic waves then travel through the water towards respective internal polygonal surfaces (3a) of the hydrolysis chamber (2) where they "bounce" into the hydrolysis chamber (2) as reflected superimposed electromagnetic waves (W ') that in turn, they also cross at another interference point (P ') where another superposition of electromagnetic waves occurs.

Figure 17C shows electromagnetic waves (W) emitted by an electric energy emitter (4) that also advance through the water inside the hydrolysis chamber (2) in the direction of the arrows towards the opposite inner polygonal surface (3a). of the hollow container (6) where they "bounce" into the hydrolysis chamber (2) as reflected superimposed electromagnetic waves (W ') that in turn intersect with the electromagnetic waves (W) emitted by the emitter (4) of electrical energy in another point of interference (P ') where another superposition of electromagnetic waves takes place.

Figure 17D shows electromagnetic waves (W) emitted by 10 emitters (4) of electrical energy. The electromagnetic waves advance through the water inside the hydrolysis chamber (2) in the direction of the arrows marked in solid lines towards the respective opposite internal polygonal surfaces (3a) of the hollow container (6) and cross each other in respective Interference points where the superpositions of these waves begin. The superimposed electromagnetic waves then advance towards respective internal polygonal surfaces (3a) of the hydrolysis chamber (2) where they "bounce" into the hydrolysis chamber (2) in the direction of the arrows marked with dashed lines as superimposed electromagnetic waves. reflected which in turn also intersect with each other and with the electromagnetic waves emitted by the emitters (4) of electrical energy at respective points of interference.

The reflected electromagnetic waves also "bounce" off the wall towards the opposite wall, reaching into the hydrolysis chamber (2), crossing with electromagnetic waves emitted by the emitters (4) and reflected electromagnetic waves with those found in its advancement through the hydrolysis chamber (2) towards the inner polygonal wall (3a) of the hollow container (6), which is not represented in Figure 17D for clarity. In this way, as illustrated in Figure 17D, a multitude of interference points (P, P ') are generated in which the electromagnetic waves overlap.

As can be seen in figure 17E, the multitude of interference points (P, P ') generated by the electromagnetic waves emitted by the 32 electrical energy emitters (4) and the corresponding reflected electromagnetic waves make up an interference zone (Z ) in the hydrolysis chamber (2) of the hollow container (6).

The superimposed electromagnetic waves as a whole have wave frequencies corresponding to a range of frequencies in which the water molecules present in the hydrolysis chamber (2) vibrate and produce vibratory reactions in the water molecules that break the bonds between hydrogen and oxygen from water molecules to dissociate water contained in the hydrolysis chamber into hydrogen gas and oxygen gas.

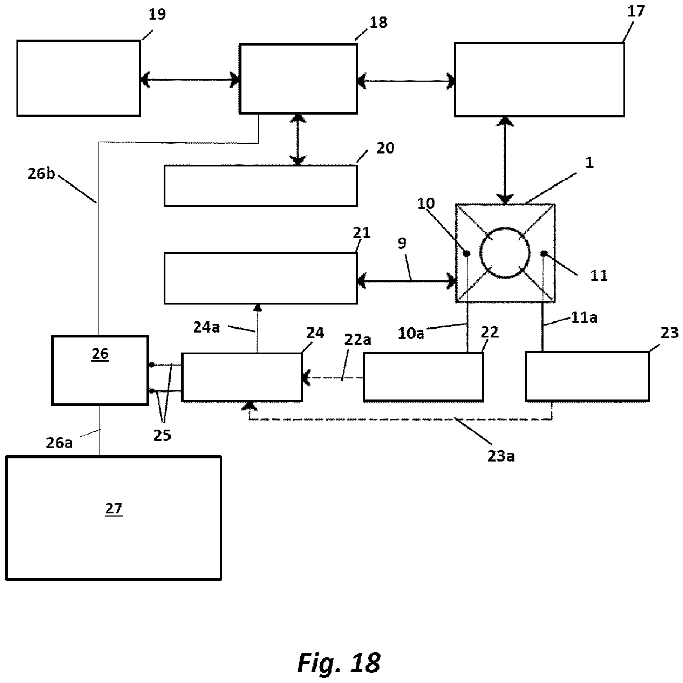

Figure 18 is a schematic representation of an embodiment of a hydrogen gas production facility integrated into an electrical power generation system, both in accordance with the invention.

It can be seen that the hydrogen gas production facility comprises an electronic control module (17) interconnected between the electrical power supply module (18) and a hydrogen gas generator device (1) such as that described above. In turn, the power supply module (18) is connected to a power supply source (19) and a backup battery (20).

The control device (17) generates electromagnetic waves with wave frequencies corresponding to a range of frequencies in which water molecules vibrate, transmits them through the signal transmitting cables (16) to the electrical energy emitters (4 ) in the manner previously described with reference to Figures 5 to 17.

The electrical power supply (19) may comprise, for example, a photovoltaic installation, a hydraulic energy installation, a geothermal energy installation, a power plant, and combinations thereof. Since the invention is based on the dissociation of water with electromagnetic waves with wave frequencies corresponding to a range of frequencies in which water molecules vibrate that produce vibratory reactions in the water molecules that break the bonds between hydrogen and oxygen in the water molecules to dissociate water hydrogen and oxygen gas, the electrical energy that the electrical power supply needs to provide can be low compared to water dissociation processes based on only electrical energy.

The water supply inlet (9) of the generator device (1) is connected to a water supply tank (21) by means of a water pipe (9a), while its first evacuation outlet (10) and its second outlet Evacuation pipes (11) are connected respectively by a first gas pipe (10a) to a hydrogen tank (22) and by a second gas pipe (11a) to an oxygen tank (23). Alternatively, for example in outdoor applications, the oxygen gas from the generator device (1) is not generated and is expelled into the environment without further ado.

The hydrogen gas production installation schematically illustrated in figure 18 is integrated in an electrical power generation system comprising a fuel cell (24). The hydrogen tank (22) and the oxygen tank (23) are connected to the fuel cell (24) itself conventional respectively through a hydrogen conduit (22a) and an oxygen conduit (23a) to feed gas hydrogen and oxygen gas to the fuel cell (24) which generates electrical energy from a reaction of hydrogen gas and oxygen gas that results in the formation of water that must be evacuated from the fuel cell (24), for which This is connected by a conduit of a water conduit (24a) to the water supply tank (21) from which the water that can be circulated through the water conduit (9a) to the water supply inlet ( 9) of the generator device (1). In the event that the installation does not comprise a collection of the oxygen gas generated in the generator device (1) and its storage in an oxygen tank, the oxygen gas necessary for the reaction in the fuel cell can be collected from the ambient air.

The electricity outlet (25) of the fuel cell (24), that is to say its anode and its cathode, are connected to an electrical control module (26) that can comprise, according to the applications envisaged, a transformer, a power inverter current, etc., which in turn is connected, through a first electrical line (26a), to an electrical device (27), such as, for example, an electrical accumulator, an electricity transmission line, a electric motor, etc. The electrical control module (26) is in turn connected, through a second electrical line (26b), to the electrical power supply module (18), which will be able to use the electrical energy received from the electrical control module (26) to charge the backup battery (20) and / or to supply energy to the electronic control module (17) that generates the electromagnetic waves for the dissociation of the water found in the hydrolysis chamber of the generating device (1).

The hydrogen gas production installation and the electrical generation system schematically illustrated in figure 18 further comprise additional elements (not illustrated in figure 18) in themselves conventional, such as, for example, gas and water pressure sensors, electrical sensors, an electrical protection system against overloads, shut-off and safety valves, pumps that pump hydrogen gas and hydrogen gas to their respective tanks (22, 23), a water pump to pump water from the supply tank water (21) to generator device (1).

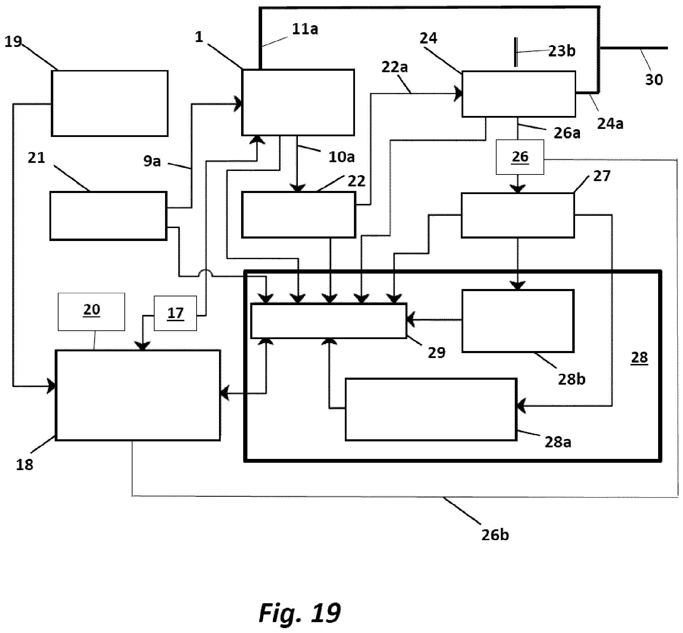

Figure 19 shows an embodiment of an electrical generation system according to the invention of the type as illustrated in Figure 18, applied to a vehicle, for example a land vehicle, particularly a motor vehicle (not represented in Figure 19. In the electrical generation system of figure 19, the electrical power supply (19) is a photovoltaic device whose photovoltaic elements can be photovoltaic cells arranged in rigid panels arranged on external parts of the car body, or layers of photovoltaic paint applied to parts outside the body. Those parts of the body can preferably be those parts of the car body exposed to a maximum of solar radiation such as the roof, the hood and / or the trunk lid.

As in the embodiment of figure 18, the electrical power supply (19) provides electrical energy to a power supply module (18) to the electronic control module (17) that generates and transmits the waves to the energy emitters. electromagnetic elements that are used in the generator device (1) to dissociate the water present in the hydrolysis chamber into hydrogen gas and oxygen gas.

The hydrogen gas produced in the generator device (1) is brought to and accumulates in the hydrogen tank (22) through the first gas conduit (10a) while the generated oxygen leaves the generator device (1) through the second gas conduit (11a).

The fuel cell (24) receives hydrogen gas from the hydrogen tank (22) through the hydrogen conduit (22a) and oxygen gas contained in the ambient air through the air intake conduit (23b) that leads to an intake air gap (not shown in figure 19) from the vehicle. The water generated in the fuel cell (24) is evacuated through the water conduit (24a). The water conduit (24a) and the oxygen conduit (11a) are connected in an exhaust pipe (30) through which the oxygen gas generated in the generator device (1) and water generated in the fuel cell (24) They are evacuated to the outside of the vehicle.

Through its electrical energy output (25) and the electrical control module (26), the fuel cell (24) supplies electrical energy to the electrical device (27) which in this case may be a conventional electrical accumulator itself, depending on the performance designed with respect to the production of hydrogen by the generating device, such as electric accumulators already currently used in hybrid cars or car batteries used in cars with an internal combustion engine. The electrical device (27), that is to say the electrical accumulator in the case of the embodiment represented in figure 19, supplies electrical energy, in a manner known per se, to the electricity consuming systems (28) of the automobile that comprise the generator system of movement (28a) comprising the electric propulsion motors, and the electric systems (28b) such as exterior and interior lighting, air conditioning, fans, comfort and safety elements, hydraulic pumps for the power steering and the servo-assisted brake, etc. (not shown in figure 19).

The generator device (1), the power supply (19), the backup battery (20), the hydrogen tank (22), the fuel cell (24), the electrical energy outlet (25), the device electrical (26), electrical systems (28b) and motion generator systems (28a) of the vehicle are connected to a system of sensors (29) that allow detecting / monitoring the status of the aforementioned elements. This sensor system (29) is connected to the power supply module (18) that is programmed to record and evaluate the measurements detected by the sensor system (29) and to govern and distribute energy based on said measurements and demand. energy of the vehicle at all times as well as the state of the electric battery, the hydrogen tank and, in general, the state set by the respective electric demand sensors.

**Claims**

1. Hydrogen gas generator device (1) from water, comprising

   a hydrolysis chamber (2) surrounded by a wall (3) to dissociate water molecules present in the hydrolysis chamber (2) into hydrogen and oxygen gases , the hydrolysis chamber (2) comprising at least one water inlet to receive water to be dissociated and at least one gas outlet to evacuate hydrogen and oxygen gases generated in the dissociation of the water in the hydrolysis chamber (2),
   a plurality of electrical energy emitters (4) connected to the hydrolysis chamber (2) to dissociate water contained in the hydrolysis chamber (2) into hydrogen gas and oxygen gas, and to an electronic control module (17) connected to the emitters ( 4) of electrical energy that receives electrical energy from an electrical power supply module (18) and designed to control the electrical energy supplied to the electrical energy emitters (4),
   a gas separator system (5) to separate hydrogen gas from the gas s generated in the hydrolysis chamber (2),
   at least one first hydrogen gas evacuation outlet (10) to evacuate hydrogen gas separated by the gas separator system,
   **characterized in that** the hydrolysis chamber (2) is an internal cavity of a hollow container (6) comprising the wall (3) surrounding the hydrolysis chamber (2);
   the water inlet and the gas outlet comprise through holes (7) in the wall (3) of the hollow container (6); comprising at least one gas outlet hole to evacuate the hydrogen and oxygen gases generated from the hydrolysis chamber (2), as well as at least one water inlet hole for the passage of water to the hydrolysis chamber (2) ;
   the electric energy emitters (4) are arranged on the wall (3) of the hollow container (6), to emit respective electrical signals that comprise electromagnetic waves of between 3 MHz and 300 MHz into the hydrolysis chamber (2),
   the electronic control module (17) is designed to emit signals that make the electric energy emitters (4) generate superimposed electromagnetic waves that together present wave frequencies corresponding to a range of frequencies in which water molecules vibrate to produce vibratory reactions in the water molecules that break bonds between hydrogen and oxygen in the water molecules to dissociate water contained in the hydrolysis chamber (2) into hydrogen gas and oxygen gas.

2. Generating device according to claim 1, **characterized in that** the wave frequencies of the superimposed electromagnetic waves are between 5 MHz and 50 MHz.

3. Generating device according to claim 1, **characterized in that** the wave frequencies of the superimposed electromagnetic waves are between 20 MHz and 30 MHz.

4. Generating device according to claim 1, 2 or 3, **characterized in that** the electrical energy emitted by the electrical energy emitters (4) has a power of 600 W to 1.5 KW.

5. Generator device according to claim 1, 2 or 3, **characterized in that** the electrical energy emitted by the electrical energy emitters (4) has a power of 700 W to 1.2 KW.

6. Generating device, according to any one of claims 1 to 5, **characterized in that** at least a part of the electric power emitters (4) comprises metallic rod electrodes (pins) with free ends (4a) that emerge into the chamber. hydrolysis (2).

7. Generating device according to any one of claims 1 to 6, **characterized in that** at least a part of the electric energy emitters (4) is comprised of piezoelectric elements (4b) are arranged on the wall (3) of the hollow container (6) .

8. Generating device according to any one of claims 1 to 7, **characterized in that** at least a part of the electric energy emitters (4) comprises metal electrodes with free ends topped on plates (4c) arranged inside the wall ( 3) from the hydrolysis chamber (2).

9. Generating device according to any one of claims 1 to 8, **characterized in that** the electric power emitters (4) are arranged in non-opposite positions of opposite parts of the wall (3) of the hollow container (6).

**10.** Generating device according to any one of claims 1 to 9, **characterized in that**

it comprises at least one water tank (8) to contain water to be separated,
the hollow container (6) is immobilized in the water tank (8), so that, during the dissociation of the water, it remains at least partially submerged in the water contained in the water tank (8);
each through hole (7) pierces the wall (3) of the hollow container (6).

**11.** Device according to claim 10, **characterized in that** the water tank (8) comprises at least one water supply inlet (9) to receive water and at least one evacuation outlet (10, 11) for gas exiting the hollow container ( 6).

**12.** Generator device according to claim 11 or 12, **characterized in that**

the gas separator system (5) is arranged in an upper space of the water tank (8);
it comprises a first evacuation outlet (10) for evacuating hydrogen gas leaving the gas separator system (5), and a second evacuation outlet (11) for evacuating oxygen gas leaving the gas separator system (5).

**13.** Device according to claim 11 or 12, **characterized in that**

the water tank (8) comprises a lower damping chamber (12) located in a lower part of the water tank (8) below the hollow container (6), and a upper chamber (13) in which the hollow container (6) is arranged;
between the lower damping chamber (12) and the upper chamber (13) there is arranged a damping plate (14) that allows the flow of water from the lower chamber (12) to the upper chamber (13);
each water supply inlet (9) opens into the lower damping chamber (12).

**14.** Device according to claim 13, **characterized in that** the damping plate (14) is a perforated plate.

**15.** Generating device according to any one of claims 10 to 14, **characterized in that** the hollow container (6) is immobilized in the water tank (8) so that, during the dissociation of the water, it is completely submerged in the water contained in the tank. of water (8).

**16.** Generating device according to claim 15, **characterized in that** the internal cavity of the hollow container (6) is in the shape of a convex polyhedron whose faces are defined on internal polygonal surfaces (3a) of the wall (3) of the hollow container (6).

**17.** Generating device, according to claim 16, **characterized in that** the internal cavity of the hollow container (6) has the shape of an irregular polyhedron whose faces are defined on internal polygonal surfaces (3a) of the wall (3) of the hollow container (6).

**18.** Generating device according to claim 17, **characterized in that** the internal cavity of the hollow container (6) has the shape of a truncated icosahedron, whose faces are defined on internal polygonal surfaces (3a) of the wall (3) of the hollow container (6).

**19.** Generating device according to claim 16, **characterized in that** the internal cavity of the hollow container (6) is in the shape of a geodesic dome.

**20.** Generating device according to claim 16, 17, 18 or 19, **characterized in that** the electric energy emitters (4) are arranged in correspondence with respective centers of the internal polygonal surfaces (3a) of the wall (3) of the hollow container (6 ).

**21.** Generator device according to any one of claims 16 to 20, **characterized in that** it comprises a plurality of first through holes (7) that penetrate the wall (3) of the hollow container (6) in the upper half of the hollow container (6) and a plurality of second through holes (7) that penetrate the wall (3) of the hollow container (6) in the upper half of the hollow container (8).

**22.** Generating device according to claim 21, **characterized in that** the through holes (7) are located in correspondence with the vertices of the internal polygonal surfaces (3a) of the wall (3) of the hollow container (6).

**23.** Generator device according to claim 21 or 22, **characterized in that** the through holes (7) have an average diameter of 2 to 5 mm.

24. Generating device according to claim 21 or 22, **characterized in that** the through holes (7) have an average diameter of 2.5 to 3 mm.

25. Generating device according to any one of claims 1 to 15, **characterized in that** the internal cavity of the hollow container (6) has the shape of a sphere delimited by the wall (3) of the hollow container (6).

26. Generating device according to any one of claims 1 to 15, **characterized in that** the internal cavity of the hollow container (6) is in the shape of a spheroid delimited by the wall (3) of the hollow container (6).

27. Generating device according to any one of the preceding claims, **characterized in that** the hollow container (6) has an outer sphere shape.

28. Generating device according to any one of the preceding claims, **characterized in that** the hollow container (6) has an outer spheroid shape.

29. Generating device according to any one of the preceding claims, **characterized in that** the hollow container (6) is made of a material selected from heat-resistant plastic materials and ceramic materials.

30. Hydrogen gas production facility comprising

an electrical power supply module,
an electronic control module connected to the electrical power supply module, at least one hydrogen gas generator device,
a water supply system that supplies water to the generator device,
a collector system of the hydrogen gas generated by the generator device, **characterized in that**

the at least one generator device is the generator device (1) defined in any one of claims 1 to 29;
the electrical power supply module (18) is connected to the electrical energy emitters (4) through the electronic control module (17).

31. Installation according to claim 30, **characterized in that** it comprises a battery (20) and an electrical power source (19) connected to the electrical power supply module (18) to supply electrical power to the electronic control module (17) through the control module. power supply (18).

32. Installation according to claim 31, **characterized in that** the electrical power source (19) is a photovoltaic installation.

33. Installation according to claim 30, 31 or 32, **characterized in that** it also comprises a system for collecting the oxygen gas generated by the generator device, and a system for storing the oxygen gas collected by the collection system.

34. Electrical energy generation system comprising

at least one fuel cell (24) that generates energy from a reaction of hydrogen and oxygen,
a hydrogen and oxygen supply system connected to the fuel cell (24),
an hydrogen gas production installation ,

**characterized in that**

the hydrogen production facility is the facility defined in any one of claims 30 to 33;
the hydrogen supplied to the fuel cell (24) comes from the hydrogen gas separated by the gas separator device (5) from the generator device (1).

35. System according to claim 34, **characterized in that** the oxygen supplied to the fuel cell comes from the oxygen gas separated by the gas separator device (5) from the generator device (1).

**EP 3 907 181 A1**

Amended claims under Art. 19.1 PCT

1. Hydrogen gas generator device (1) from water, comprising

   a hydrolysis chamber (2) surrounded by a wall (3) to dissociate water molecules present in the hydrolysis chamber (2) into hydrogen and oxygen gases , the hydrolysis chamber (2) comprising at least one water inlet to receive water to be dissociated and at least one gas outlet to evacuate hydrogen and oxygen gases generated in the dissociation of the water in the hydrolysis chamber (2), the hydrolysis chamber (2) being an internal cavity of a hollow container (6) comprising the wall (3) surrounding the hydrolysis chamber (2);
   a plurality of electrical energy emitters (4) connected to the hydrolysis chamber (2) to dissociate water contained in the hydrolysis chamber (2) into hydrogen gas and oxygen gas, and to an electronic control module (17) connected to the emitters ( 4) of electrical energy that receives electrical energy from an electrical power supply module (18) and designed to control the electrical energy supplied to the electrical energy emitters (4), the electronic control module (17) being designed to emit signals that make the electric energy emitters (4) generate superimposed electromagnetic waves that together present wave frequencies corresponding to a range of frequencies in which water molecules vibrate to produce vibratory reactions in the water molecules that break bonds between hydrogen and oxygen in the water molecules to dissociate water contained in the hydrolysis chamber (2) into hydrogen gas and oxygen gas,
   a gas separator system (5) to separate hydrogen gas from the gas s generated in the hydrolysis chamber (2),
   at least one first hydrogen gas evacuation outlet (10) to evacuate hydrogen gas separated by the gas separator system,
   **characterized in that**
   the hollow container (6) is immobilized in a water tank (8) suitable to contain water to be dissociated, so that, during the dissociation of the water, it remains at least partially submerged in the water contained in the water tank (8);
   the water inlet and the gas outlet comprise through holes (7) in the wall (3) of the hollow container (6); comprising at least one gas outlet hole to evacuate the hydrogen and oxygen gases generated from the hydrolysis chamber (2), as well as at least one water inlet hole for the passage of water to the hydrolysis chamber (2) each through hole (7) piercing the wall (3) of the hollow container (6). ;
   the electric energy emitters (4) are arranged in non-opposite positions of opposite parts of the wall (3) on the wall (3) of the hollow container (6), to emit respective electrical signals that comprise electromagnetic waves of between 3 MHz and 300 MHz into the hydrolysis chamber (2).

2. Generating device according to claim 1, **characterized in that** the wave frequencies of the superimposed electromagnetic waves are between 5 MHz and 50 MHz.

3. Generating device according to claim 1, **characterized in that** the wave frequencies of the superimposed electromagnetic waves are between 20 MHz and 30 MHz.

4. Generating device according to claim 1, 2 or 3, **characterized in that** the electrical energy emitted by the electrical energy emitters (4) has a power of 600 W to 1.5 KW.

5. Generator device according to claim 1, 2 or 3, **characterized in that** the electrical energy emitted by the electrical energy emitters (4) has a power of 700 W to 1.2 KW.

6. Generating device, according to any one of claims 1 to 5, **characterized in that** at least a part of the electric power emitters (4) comprises metallic rod electrodes (pins) with free ends (4a) that emerge into the chamber. hydrolysis (2).

7. Generating device according to any one of claims 1 to 6, **characterized in that** at least a part of the electric energy emitters (4) is comprised of piezoelectric elements (4b) are arranged on the wall (3) of the hollow container (6) .

8. Generating device according to any one of claims 1 to 7, **characterized in that** at least a part of the electric energy emitters (4) comprises metal electrodes with free ends topped on plates (4c) arranged inside the wall ( 3) from the hydrolysis chamber (2).

9. Device according to any one of claims 1 to 8, **characterized in that** the water tank (8) comprises at least one water supply inlet (9) to receive water and at least one evacuation outlet (10, 11) for gas exiting the hollow container ( 6).

10. Generator device according to claim 9, **characterized in that**

the gas separator system (5) is arranged in an upper space of the water tank (8);
it comprises a first evacuation outlet (10) for evacuating hydrogen gas leaving the gas separator system (5), and a second evacuation outlet (11) for evacuating oxygen gas leaving the gas separator system (5).

11. Device according to claim 9 or 10, **characterized in that**

the water tank (8) comprises a lower damping chamber (12) located in a lower part of the water tank (8) below the hollow container (6), and a upper chamber (13) in which the hollow container (6) is arranged;
between the lower damping chamber (12) and the upper chamber (13) there is arranged a damping plate (14) that allows the flow of water from the lower chamber (12) to the upper chamber (13);
each water supply inlet (9) opens into the lower damping chamber (12).

12. Device according to claim 11, **characterized in that** the damping plate (14) is a perforated plate.

13. Generating device according to any one of claims 1 to 12, **characterized in that** the hollow container (6) is immobilized in the water tank (8) so that, during the dissociation of the water, it is completely submerged in the water contained in the tank. of water (8).

14. Generating device according to claim 13, **characterized in that** the internal cavity of the hollow container (6) is in the shape of a convex polyhedron whose faces are defined on internal polygonal surfaces (3a) of the wall (3) of the hollow container (6).

15. Generating device, according to claim 14, **characterized in that** the internal cavity of the hollow container (6) has the shape of an irregular polyhedron whose faces are defined on internal polygonal surfaces (3a) of the wall (3) of the hollow container (6).

16. Generating device according to claim 15, **characterized in that** the internal cavity of the hollow container (6) has the shape of a truncated icosahedron, whose faces are defined on internal polygonal surfaces (3a) of the wall (3) of the hollow container (6).

17. Generating device according to claim 14, **characterized in that** the internal cavity of the hollow container (6) is in the shape of a geodesic dome.

18. Generating device according to claim 14, 16, 16 or 17, **characterized in that** the electric energy emitters (4) are arranged in correspondence with respective centers of the internal polygonal surfaces (3a) of the wall (3) of the hollow container (6 ).

19. Generator device according to any one of claims 14 to 18, **characterized in that** it comprises a plurality of first through holes (7) that penetrate the wall (3) of the hollow container (6) in the upper half of the hollow container (6) and a plurality of second through holes (7) that penetrate the wall (3) of the hollow container (6) in the upper half of the hollow container (8).

20. Generating device according to claim 19, **characterized in that** the through holes (7) are located in correspondence with the vertices of the internal polygonal surfaces (3a) of the wall (3) of the hollow container (6).

21. Generator device according to claim 19 or 22, **characterized in that** the through holes (7) have an average diameter of 2 to 5 mm.

22. Generating device according to claim 19 or 21, **characterized in that** the through holes (7) have an average diameter of 2.5 to 3 mm.

23. Generating device according to any one of claims 1 to 13, **characterized in that** the internal cavity of the hollow container (6) has the shape of a sphere delimited by the wall (3) of the hollow container (6).

24. Generating device according to any one of claims 1 to 13, **characterized in that** the internal cavity of the hollow container (6) is in the shape of a spheroid delimited by the wall (3) of the hollow container (6).

**25.** Generating device according to any one of the preceding claims, **characterized in that** the hollow container (6) has an outer sphere shape.

**26.**

**27.** Generating device according to any one of the preceding claims, **characterized in that** the hollow container (6) has an outer spheroid shape.

**28.** Generating device according to any one of the preceding claims, **characterized in that** the hollow container (6) is made of a material selected from heat-resistant plastic materials and ceramic materials.

**29.** Hydrogen gas production facility comprising

an electrical power supply module,
an electronic control module connected to the electrical power supply module,
at least one hydrogen gas generator device,
a water supply system that supplies water to the generator device,
a collector system of the hydrogen gas generated by the generator device, **characterized in that**

the at least one generator device is the generator device (1) defined in any one of claims 1 to 28;
the electrical power supply module (18) is connected to the electrical energy emitters (4) through the electronic control module (17).

**30.** Installation according to claim 29, **characterized in that** it comprises a battery (20) and an electrical power source (19) connected to the electrical power supply module (18) to supply electrical power to the electronic control module (17) through the control module. power supply (18).

**31.** Installation according to claim 30, **characterized in that** the electrical power source (19) is a photovoltaic installation.

**32.** Installation according to claim 29, 30 or 31, **characterized in that** it also comprises a system for collecting the oxygen gas generated by the generator device, and a system for storing the oxygen gas collected by the collection system.

**33.** Electrical energy generation system comprising

at least one fuel cell (24) that generates energy from a reaction of hydrogen and oxygen,
a hydrogen and oxygen supply system connected to the fuel cell (24),
an hydrogen gas production installation ,

**characterized in that**

the hydrogen production facility is the facility defined in any one of claims 29 to 32;
the hydrogen supplied to the fuel cell (24) comes from the hydrogen gas separated by the gas separator device (5) from the generator device (1).

**34.** System according to claim 33, **characterized in that** the oxygen supplied to the fuel cell comes from the oxygen gas separated by the gas separator device (5) from the generator device (1).

**Fig. 1**

**Fig. 2**

Fig. 3

Fig. 4

**Fig. 5**

**Fig. 6 (A-A)**

**Fig. 7**
**(B-B)**

**Fig. 10**
**(B-B)**

**Fig. 13**
**(B-B)**

**Fig. 8**

**Fig. 11**

**Fig. 14**

**Fig. 9**
**(D-D)**

**Fig. 12**
**(E-E)**

**Fig. 15**
**(F-F)**

**Fig. 16**
**(C-C)**

**Fig. 17A**

**Fig. 17B**

**Fig. 17C**

**Fig. 17D**

**Fig. 17E**

*Fig. 18*

*Fig. 19*

## INTERNATIONAL SEARCH REPORT

| | International application No. |
|---|---|
| | PCT/ES2019/070193 |

### A. CLASSIFICATION OF SUBJECT MATTER

*C01B3/04* (2006.01)

According to International Patent Classification (IPC) or to both national classification and IPC

### B. FIELDS SEARCHED

Minimum documentation searched (classification system followed by classification symbols)

C01B, C25B

Documentation searched other than minimum documentation to the extent that such documents are included in the fields searched

Electronic data base consulted during the international search (name of data base and, where practicable, search terms used)

INVENES, EPODOC, WPI, TXTE, Internet

### C. DOCUMENTS CONSIDERED TO BE RELEVANT

| Category* | Citation of document, with indication, where appropriate, of the relevant passages | Relevant to claim No. |
|---|---|---|
| X | US 7378063 B1 (WYLES) 27/05/2008, | 1-29 |
| Y | abstract; column 1, lines 16 - 51; column 4, line 58 - column 8, line 24; figures 1 - 4. | 30-35 |
| Y | US 2015274521 A1 (DAVIDSON) 01/10/2015, abstract; paragraphs [53 - 72]; figure 1. | 30-35 |
| A | VARIOS. Photocatalytic water splitting. Wikipedia, 26/02/2018 [on line][retrieved on 28/02/2019]. Retrieved from Internet <URL: https://en.wikipedia.org/w/index.php?title=Photocatalytic_water_splitting&oldid=827747524> | |

☐ Further documents are listed in the continuation of Box C.　　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 04/06/2019 | **(07/06/2019)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | A. Figuera González |
| | Telephone No. 91 3495516 |

Form PCT/ISA/210 (second sheet) (January 2015)

## INTERNATIONAL SEARCH REPORT

Information on patent family members

| | | International application No. |
|---|---|---|
| | | PCT/ES2019/070193 |

| Patent document cited in the search report | Publication date | Patent family member(s) | Publication date |
|---|---|---|---|
| US7378063 B1 | 27.05.2008 | US2006086603 A1 | 27.04.2006 |
| US2015274521 A1 | 01.10.2015 | US10301178 B2<br>WO2014064692 A1<br>EP2911976 A1<br>EP2911976 A4 | 28.05.2019<br>01.05.2014<br>02.09.2015<br>27.07.2016 |

Form PCT/ISA/210 (patent family annex) (January 2015)

**EP 3 907 181 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6534033 B
- US 7344571 B
- US 7455829 B
- US 7513978 B
- US 7803349 B
- US 7833473 B
- US 7951349 B
- US 20060185242 A
- US 20090294300 A
- EP 2911976 A4